# EUROPÄISCHE PATENTSCHRIFT

(11) **EP 1 326 695 B1**
(45) Veröffentlichungstag und Bekanntmachung des Hinweises auf die Patenterteilung: **03.03.2004**
(21) Anmeldenummer: 01974332.7
(22) Anmeldetag: 06.10.2001
(51) Int. Cl.: B01D 35/147

(54) **FILTERVORRICHTUNG**
FILTER DEVICE
DISPOSITIF DE FILTRATION

(30) Priorität: 11.10.2000 DE 10050128
(43) Veröffentlichungstag der Anmeldung: 16.07.2003
(73) Patentinhaber: Hydac Filtertechnik GmbH, 66280 Sulzbach/Saar (DE)
(72) Erfinder: WILKENDORF, Werner, 66564 Ottweiler (DE)
(74) Vertreter: Patentanwälte Bartels und Partner
(86) Internationale Anmeldenummer: PCT/EP2001/011551
(87) Internationale Veröffentlichungsnummer: WO 2002/031365

(56) Entgegenhaltungen:
- EP-A- 0 691 234
- CH-A- 411 503
- DE-A- 1 932 908
- DE-A- 2 943 526
- DE-A- 19 950 052
- FR-A- 944 219
- GB-A- 2 164 395
- US-A- 3 990 424
- US-A- 4 027 643
- US-A- 4 174 699
- US-A- 4 512 300
- PATENT ABSTRACTS OF JAPAN vol. 1997, no. 07, 31. Juli 1997 (1997-07-31) & JP 09 066749 A (KUBOTA CORP), 11. März 1997 (1997-03-11)

## Beschreibung

Die Erfindung betrifft eine Filtervorrichtung mit den Merkmalen des Oberbegriffes des Patentanspruches 1.

Bei bekannten Lösungen, wie sie auf dem Markt frei erhältlich sind, werden solche Filtervorrichtungen in allen Arten von hydraulischen Anlagen, insbesondere auch bei Baumaschinen, eingesetzt. Als Filtereinheiten kommen dabei unter anderem auch sog. Rücklauf-Saugfilter zum Einsatz, bei denen in einer Zuführleitung Rücklaufleitungen der jeweiligen hydraulischen Anlage münden, wobei die Rücklaufleitungen in sog. Sammler zusammengefaßt sind, die dann einen zentralen Zufluß des verschmutzten Fluids bzw. des Hydraulikmediums zu der jeweiligen Rücklauf-Saugfiltereinheit gewährleisten und wobei nach der Filtration das gereinigte Fluid an einen Sauganschluß weitergegeben wird, der wiederum die hydraulische Anlage mit de gereinigten Hydraulikmedium versorgt.

Des weiteren kann vorgesehen sein, um ein Überhitzen der Hydraulikanlage zu vermeiden, in die Zuführleitung, in die die Rücklaufleitungen münden, vor Zulauf in den eigentlichen Filterkreis in einer Nebenzweigleitung eine Kühleinheit vorzuschalten, wobei ein üblicher Thermostatregler in Abhängigkeit von der Betriebstemperatur des Hydraulikmediums die Kühleinheit zu- oder abschalten kann. Insbesondere bei tiefen oder niedrigen Temperaturen des Hydraulikmediums kann die Umschalteinrichtung mit dem Thermostatregler und/oder die Komponenten des Kühlkreises selbst einen Staudruck erzeugen, welcher zu Druckspitzen in den vorgelagerten Einheiten führt, beispielsweise bei einem Hydraulikmotor und einer Hydraulikpumpe, was ihre Dichtelemente schädigen kann. Des weiteren sind die genannten fluidführenden Bauteile bei der bekannten Lösung über die genannten Sammler und Leitungen miteinander verbunden, wobei das Herstellen der dahingehenden fluidführenden Verbindungen über die übliche Verrohrungstechnik unter Einsatz von Schweißverbindungen erfolgen kann. Mithin bauen die bekannten Filtervorrichtungen konstruktiv groß auf und sind teuer in der Herstellung.

Durch die DE-A-34 02 884 Al ist eine Filtervorrichtung bekannt, wobei in das System der Regulierung einer Arbeitsflüssigkeitstemperatur ein Thermostat eingebaut ist, der automatisch in Abhängigkeit der Temperatur der reversiblen Arbeitsflüssigkeit in dem System den Zweig zu dem Kühler schließt oder öffnet. Die erwärmte reversiblen Arbeitsflüssigkeit fließt aus dem Thermostat direkt vor den Filter in den Saugzweig der Füll-Flüssigkeitpumpe, d.h. unter Umgehung des Kühlers und des Behälters. Der Thermostat schließt also den Durchfluß der Arbeitsflüssigkeit in den Teil des Kreises, der den Kühler und den Behälter enthält, in dem Fall, in dem die Temperatur der Arbeitsflüssigkeit niedrig ist. Wenn die Temperatur der Arbeitsflüssigkeit den Wert erreicht, bei der sich der Thermostat öffnet, strömt ein Teil der Arbeitsflüssigkeit durch den Verbindungszweig in den Kühler und weiter in den Behälter. Der Thermostat öffnet sich ganz, wenn die Temperatur der Arbeitsflüssigkeit in dem Behälter den optimalen Wert erreicht. Die ganze Arbeitsflüssigkeit, die aus dem geschlossenen Hydraulikkreis zurückkehrt, fließt weiter nur über den Kühler in den Behälter. Auch bei dieser bekannten Lösung kann der Thermostat insbesondere bei tiefen oder niedrigen Temperaturen des Hyraulikmediums innerhalb des Hydraulikkreises einen Staudruck erzeugen, welcher zu schädigenden Druckspitzen in den vorgelagerten Einheiten führt.

Durch die US-A-3,990,424 ist eine gattungsgemäße Filtervorrichtung bekannt mit mindestens einer Filtereinheit, die an einen Hydraulikkreis anschließbar ist, mit mindestens einer Zuführ- und einer Abführleitung und mit mindestens einer in einer Nebenzweigleitung angeschlossenen Kühleinheit, die parallel zu der Zuführleitung in den Hydraulikkreis geschaltet ist, und mittels einer Umschalteinrichtung bei einem vorgebbaren Temperaturschwellenwert des zu kühlenden Hydraulikmediums mit diesem versorgt ist, wobei in Strömungsrichtung des Hydraulikmediums in der Zuführleitung vor der Umschalteinrichtung eine Permanentversorgung für die Kühleinheit besteht und wobei diese Permanentversorgung parallel zu der Umschalteinrichtung geschaltet in die Nebenzweigleitung mündet. Bei dieser bekannten Filtervorrichtung, die insbesondere ihren Einsatz bei Jet angetriebenen Rennbooten findet, wird die Permanentversorgung über die Ventilkammer veranlaßt, an die die Kühleinheit permanent fluidführend angeschlossen ist und in Abhängigkeit des jeweiligen Temperaturschwellenwertes und mithin in Abhängigkeit von der Schaftstellung der Umschalteinrichtung wird bei tiefen Temperaturen des Hydraulikmediums dieses direkt der Filtereinheit zugeführt und bei hohen Temperaturen des Hydraulikmediums erfolgt der Umweg über die Kühleinheit, bevor das dann gekühlte Medium der Filtereinheit zugeführt wird. Aufgrund des direkten Anschlusses der Kühleinheit an die Ventilkammer kann sich in der Anlage ein schädlicher Staudruck aufbauen, welcher zu Druckspitzen in den vorgelagerten Einheiten und in der Kühleinheit selbst führt. Darüber hinaus ist die Kühleinheit als Funktionsblock an die vorgesehene Ventilkammer anschlußtechnisch genau anzupassen, was die Herstellung der bekannten Lösung teuer werden läßt.

Ausgehend von diesem Stand der Technik liegt der Erfindung die Aufgabe zugrunde, die bekannten Filtervorrichtungen dahingehend weiter zu verbessern, daß der schädliche Staudruck in der Anlage vermieden und dennoch ein funktionssicherer Betrieb gewährleistet ist. Darüber hinaus soll gewährleistet werden, daß die Filtervorrichtung konstruktiv klein aufbaut und sowohl in der Herstellung als auch im späteren Betrieb kostengünstig ist. Die dahingehende Aufgabenstellung löst eine Filtervorrichtung mit den Merkmalen des Anspruches 1.

Mit der Merkmalsausgestaltung des kennzeichnenden Teils des Anspruches 1 ist es möglich, den Volumenstrom im Rücklauf abhängig von der Fluidtemperatur derart zu regeln, daß auch bei tiefen oder niedrigen Temperaturen, bei denen die Umschalteinrichtung noch nicht betätigt worden ist, ein Teilstrom des Hydraulikmediums in der Zuführleitung direkt zu der Kühleinheit gelangt, so daß permanent die Kühleinheit mit dem Hydraulikmedium versorgt ist. Durch die dahingehende Bypaßschaltung liegt der Staudruck unabhängig von der Betätigungssituation der Umschalteinrichtung an der Kühleinheit an, wodurch diese bei Bedarf jederzeit entlüftet werden kann.

Die Permanentversorgung läßt sich konstruktiv in einfacher Weise mit der Umschalteinrichtung kombinieren und insbesondere in einer Baukomponente zusammenfassen, so daß dahingehend wenig Bauraum benötigt wird und die erfindungsgemäße Filtervorrichtung läßt sich demgemäß auch einfach und kostengünstig herstellen und betreiben.

Bei einer bevorzugten Ausführungsform der erfindungsgemäßen Filtervorrichtung weist die Umschalteinrichtung einen Öltemperaturregler auf, der derart eine Schaltcharakteristik hat, daß er bei niederen Temperaturen des Hydraulikmediums diesem den Weg zur Filtereinheit freigibt und bei Erreichen des Temperaturschwellenwertes das erhitzte Hydraulikmedium der Kühleinheit zuführt, die über die Nebenzweigleitung das gekühlte Fluid an die Filtereinheit weitergibt. Derart läßt sich mittels des Öltemperaturreglers sehr exakt die Kühleinheit für einen definiert verlaufenden Kühlprozeß ansteuern. Der Öltemperaturregler kann dabei ein handelsübliches, beispielsweise aus dem Kühlkreislauf von Verbrennungsmotoren bekanntes Bauteil sein.

Bei einer weiteren besonders bevorzugten Ausführungsform der erfindungsgemäßen Filtervorrichtung ist die Permanentversorgung derart mit einer Drossel versehen, daß insbesondere in der Betriebssituation "tiefe Temperatur" für das Hydraulikmedium der Staudruck in der Zuführleitung reduziert ist. Des weiteren ist über die genannte Drossel ein Entlüften der nachgeschalteten Kühleinheit möglich, und zwar in jeder Betriebssituation der Filtervorrichtung. Bei den bekannten Filtervorrichtungen ist häufig das angesprochene Entlüften nur möglich in der Schaltstellung "hohe Temperatur" oder in einer Art Notschaltstellung, die jedoch bei den bekannten Vorrichtungen teilweise nur optional erhältlich ist.

Bei einer weiteren bevorzugten Ausführungsform der erfindungsgemäßen Filtervorrichtung münden in die Zuführleitung in der Strömungsrichtung des Hydraulikmediums gesehen vor der Umschalteinrichtung die Rücklaufleitungen eines Hydromotors und einer Hydropumpe ein, die insbesondere zu einem hydrostatischen Getriebe zusammengefaßt sind, wobei in Strömungsrichtung des Hydraulikmediums hinter der Umschalteinrichtung die Rücklaufleitung der Arbeitshydraulik gleichfalls in die Zuführleitung mündet. Hierdurch ist eine kompakte Bauweise für die Filtervorrichtung erreichbar und es können die üblichen miteinander zu verschweißenden Verbindungsleitungen sowie Sammlereinrichtungen entfallen. In einer Baueinheit zusammengefaßt sind daher alle Anschlußmöglichkeiten für alle vorhandenen Baugruppen vorhanden, was zu einer konstruktiv klein aufbauenden Filtervorrichtung führt. Vorzugsweise ist dabei zumindest die Umschalteinrichtung sowie die Permanentversorgung Bestandteil eines Filterkopfes, der sich mit einem Gehäuseteil verbinden läßt, das die Filtereinheit aufnimmt. Dergestalt läßt sich die Filtervorrichtung in einem gemeinsamen Filtergehäuse von Filtereinheit und Ansteuereinheit zusammenfassen.

Weitere vorteilhafte Ausgestaltungen der erfindungsgemäßen Filtervorrichtung sind Gegenstand der sonstigen Unteransprüche.

Im folgenden wird die erfindungsgemäße Filtervorrichtung anhand einer Ausführungsform nach der Zeichnung näher erläutert. Es zeigen dabei in prinzipieller und nicht maßstäblicher Darstellung die
- Fig.1: einen Schaltplan für eine bekannte Filtervorrichtung, wie sie auf dem Markt frei erhältlich ist;
- Fig.2: eine Schaltdarstellung der erfindungsgemäßen Filtervorrichtung mit ihren wesentlichen Komponenten;
- Fig.3: in perspektivischer Darstellung die Filtervorrichtung mit ihren Anschlüssen;
- Fig.4: in Draufsicht einen Schnitt durch das in der Fig.3 dargestellte Filtergehäuse mit angeschlossener Kühleinheit;
- Fig.5 und 6: die jeweilige Schaltstellung des Öltemperaturreglers bei tiefer bzw. bei hoher Temperatur.

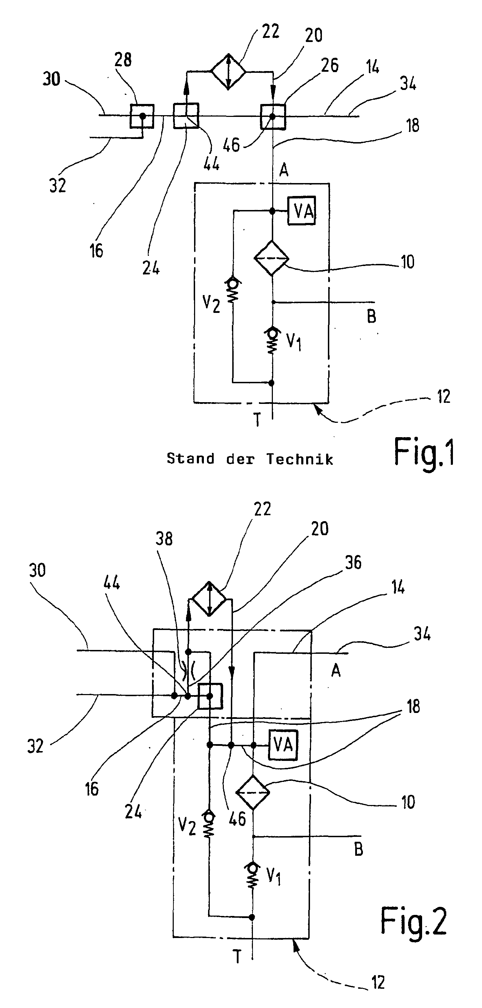

Bei der bekannten Filtervorrichtung nach der Fig.1 ist diese mit einer Filtereinheit 10 üblicher Bauart versehen. Die Filtereinheit 10 ist Bestandteil eines als Ganzes mit 12 bezeichneten Rücklaufsaugfilters, dessen wesentliche Komponenten in der Fig.1 mit einem strichlinierten Rahmen umgeben sind. Der Rücklauf-Saugfilter 12 ist des weiteren mit einer Verschmutzungsanzeige VA versehen, die eine optische oder sonstige Signalrückmeldung gibt im Hinblick auf den Verschmutzungszustand der eigentlichen Filtereinheit 10. In eine Bypaßleitung zur Filtereinheit 10 ist ein federbelastetes Rückschlagventil V2 in der Art eines Bypaßventils geschaltet. Ist die Filtereinheit 10 von Verschmutzungen zugesetzt, öffnet das vorgespannte Bypaßventil V2 zum Tank T hin und gefährliche Druckspitzen können sich dergestalt in der Anlage nicht aufbauen. In Strömungsrichtung hinter der Filtereinheit 10 ist der Sauganschluß B geschaltet, der in Verbindung mit dem federbelasteten Rückschlagventil V1 einen Vorspanndruck erzeugt, der gewährleistet, daß die Ölsäule im hydraulischen Kreis 14 nicht abreißen kann. Der mögliche Schließdruck des Bypaßventils V2 ist größer gewählt als derjenige des Rückschlagventils V1, um zu vermeiden, daß ungewollt unter Umgehung der Filtereinheit 10 das zu filtrierende Fluid, das über den Anschluß A zugeführt wird, in Richtung des Tanks T in diesen unfiltriert abgeführt wird.

Der Hydraulikkreis 14 weist eine Zuführleitung 16 sowie eine Abführleitung 18 auf, wobei letztere an den Anschluß A des Rücklauf-Saugfilters 12 angeschlossen ist. In einer Nebenzweigleitung 20, die parallel zu der Zuführleitung 16 in den Hydraulikkreis 14 geschaltet ist, ist eine Kühleinheit 22 angeschlossen. In Blickrichtung auf die Fig.1 gesehen mündet die Nebenzweigleitung 20 mit ihrem einen freien Ende in eine Umschalteinrichtung 24 und mit ihrem anderen freien Ende in einen Sammler 26, in den ansonsten die Zuführleitung 16 mündet sowie die Abführleitung 18. Bei einem vorgebbaren Temperaturschwellenwert des zu kühlenden Hydraulikmediums wird die Umschalteinrichtung 24 betätigt und führt das zu kühlende Hydraulikmedium der Kühleinheit 22 zu, wobei dann das gekühlte Hydraulikmedium über die Nebenzweigleitung 20 an den Sammler 26 weitergegeben wird und von dort aus über die Abführleitung 18 in den Rücklauf-Saugfilter 12 gelangt.

Nach Abreinigen des verschmutzten Mediums über die Filtereinheit 10 wird dann das derart gereinigte Fluid oder Hydraulikmedium über den Sauganschluß B dem Hydraulikkreis 14 zurückgegeben, an den beispielsweise eine Hydropumpe von einer Arbeits- oder Werkzeugmaschine angeschlossen ist. Neben dem Sammler 26 ist ein weiterer Sammler 28 vorhanden, in den die Rücklaufleitung 30 eines Hydromotors (nicht dargestellt) sowie die Rücklaufleitung 32 einer Hydropumpe (nicht dargestellt) münden. Der nicht näher dargestellte Hydromotor sowie die nicht näher dargestellte Hydropumpe sind Bestandteil eines nicht näher dargestellten hydrostatischen Getriebes, für den die gezeigte Filtervorrichtung eingesetzt wird. Da dahingehende Anordnungen, insbesondere hydrostatische Getriebe, Stand der Technik sind, wird diesbezüglich auf Einzelheiten an dieser Stelle nicht näher eingegangen. In den Sammler 26 mündet darüber hinaus die Rücklaufleitung 34 der eigentlichen Arbeitshydraulik (nicht dargestellt), die beispielsweise einen üblichen Arbeitszylinder für eine Baggermaschine od. dgl. aufweist.

Insbesondere bei tiefen bzw. niedrigen Temperaturen für das Hydraulikmedium, die beispielsweise beim Anfahren der hydraulischen Anlage nach längerem Stillstand entstehen, erzeugen die Bauteile, insbesondere auch in Form des Rücklauf-Saugfilters 12, in der Zuführleitung 16 einen Widerstand in Form eines erhöhten Staudruckes, was in den vorgelagerten Einheiten in Form des Hydromotors und der Hydropumpe zur Beschädigung ihrer Dichtelemente führen kann, was insgesamt die gesamte hydraulische Anlage ausfallen läßt. Um dies zu vermeiden, ist bei der erfindungsgemäßen Ausführungsform einer Filtervorrichtung nach der Fig.2 vorgesehen, daß in Strömungsrichtung des Hydraulikmediums in der Zuführleitung 16 vor der Umschalteinrichtung 24 und unabhängig von deren Schaltstellung eine Permanentversorgung 36 für die Kühleinheit 22 besteht, wobei diese Permanentversorgung 36 parallel zu der Umschalteinrichtung 24 geschaltet in die Nebenzweigleitung 20 mit der Kühleinheit 22 mündet. Die Permanentversorgung 36 ist dabei im wesentlichen in der Art einer weiteren Zuflußleitung oder eines Zuflußkanals ausgebildet.

Die Baukomponenten gemäß der erfindungsgemäßen Filtervorrichtung nach der Fig.2 werden, sofern sie ihre Entsprechung in der bekannten Filtervorrichtung nach der Fig.1 finden, mit denselben Bezugszeichen bezeichnet, wobei die bisherigen Ausführungen hierzu auch für die erfindungsgemäße Lösung nach der Fig.2 gelten. Ein weiterer Unterschied besteht auch darin, daß auf die bekannten Sammler 26 und 28 bei der erfindungsgemäßen Lösung vollständig verzichtet wurde; vielmehr konnte eine unmittelbare Anschlußtechnik der Komponenten untereinander mit ihren Versorgungsleitungen erreicht werden, was im folgenden noch näher dargestellt werden wird.

Auch die erfindungsgemäße Lösung setzt als Umschalteinrichtung 24 einen üblichen Öltemperaturregler ein, wie er beispielsweise aus der Heizungstechnik bekannt ist. Dieser weist derart eine Schaltcharakteristik auf, daß er bei niederen Temperaturen des Hydraulikmediums diesem den Weg zur Filtereinheit 10 des Rücklauf-Saugfilters 12 freigibt und bei Erreichen des Temperaturschwellenwertes das erhitzte Hydraulikmedium der Kühleinheit 22 zuführt, die über die Nebenzweigleitung 20 das gekühlte Fluid an die Filtereinheit 10 weitergibt. Die Permanentversorgung 36 in Form einer entsprechenden Verbindungsleitung oder eines Verbindungskanals ist mit einer Drossel 38 oder einer Blende derart versehen, daß insbesondere in der Betriebssituation "tiefe Temperatur" für das Hydraulikmedium gleichfalls ein schädigender Staudruck in der Zuführleitung 16 vermieden ist. Unabhängig von der Drossel 38 sind jedenfalls die Leitungsquerschnitte bezogen auf die Permanentversorgung 36 und die Nebenzweigleitung 20 derart erhöht, daß Widerstände im hydraulischen Kreis 14 nicht derart in relevanter Weise entstehen können, daß der Staudruck in den Rücklaufleitungen 30,32 wesentl ich erhöht ist. Die dahingehende Permanentversorgung 36 mit Drossel 38 erlaubt auch in jeder Betriebssituation der Filtervorrichtung ein Entlüften bezogen auf die Kühleinheit 22. Eine Entlüftungsmöglichkeit von Hand betätigbar kann dabei unmittelbar an der Umschalteinrichtung 24 vorgesehen sein.

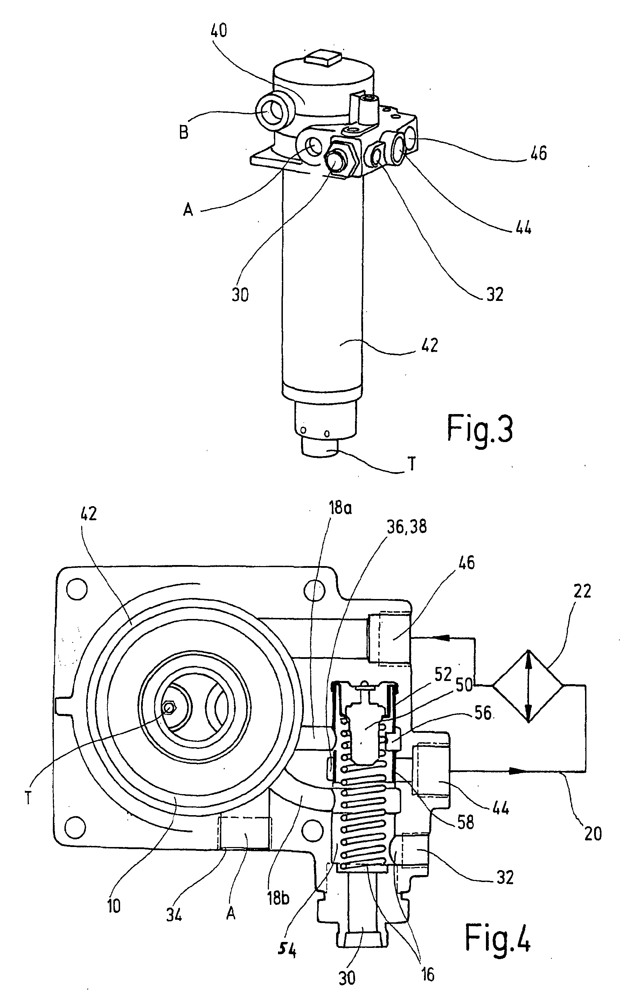

Wie die Fig.3 zeigt, sind bei der bevorzugten Ausführungsform der erfindungsgemäßen Filtervorrichtung alle Komponenten derselben zu einer Baueinheit zusammengefaßt. So sind zumindest die Umschalteinrichtung 24 sowie die Permanentversorgung 36 Bestandteile eines Abschluß- oder Kopfteils 40, das flanschartig aufgebaut ist und sich mit einem topfartigen unteren Gehäuseteil 42 verbinden läßt, das die Filtereinheit 10 aufnimmt. Im Bereich des oberen Deckelteils 40 sind auch die Anschlußmöglichkeiten für die Arbeitshydraulik A, den Sauganschluß B sowie für den Hydromotor oder die Hydropumpe bezogen auf ihre Rücklaufleitungen 30 und 32 vorgesehen. Neben diesen Anschlußstellen befinden sich im wesentlichen in einer Ebene liegend noch die Anschlußstellen 44 und 46 für den Anschluß der Nebenzweigleitung 20 zur Kühleinheit 22 führend bzw. von der Kühleinheit 22 kommend. Auf der Unterseite des topfartigen Gehäuseteils 42 befindet sich des weiteren der Tankanschluß T.

Die Fig. 4ff geben dabei noch eine verbesserte Vorstellung über den Aufbau und die Funktion der Umschalteinrichtung 24 in Verbindung mit dem Aufbau und der Wirkung der Permanentversorgung 36. So weist die Umschalteinrichtung 24 in Form des Öltemperaturreglers ein mit einem Kraftspeicher in Form einer Druckfeder 48 beaufschlagtes Dehnstoffelement 50 auf. Dahingehende Dehnstoffelemente 50 sind aus der Kraftfahrzeugtechnik hinreichend bekannt. Das Dehnstoffelement 50 steuert ein hülsenförmiges Schaltventil 52 an, das entgegen der Wirkung der Druckfeder 48 längsverschiebbar in einem Ventilraum 54 geführt ist. Wie des weiteren die Fig.4 zeigt, münden in den Ventilraum 54 die Rücklaufleitungen 30 und 32 von Hydromotor bzw. Hydropumpe. Des weiteren mündet in den Ventilraum 54 die zur Filtereinheit 10 führende Zuführleitung 16, die zumindest teilweise als Bestandteil des Ventilraumes 54 in diesen übergeht.

Um die freie Querschnittsfläche der Abführleitung 18 zu erhöhen, ist diese in zwei Teilzweige 18a,b aufgeteilt, wobei in Blickrichtung auf die Fig.4 gesehen die Schalthülse 52 in der Reglerstellung "tiefe Temperatur" für das Hydraulikmedium den oberen Abführleitungszweig 18a abdeckt bis auf einen fluidführenden Durchlaß 56, der in Längsrichtung der Schalthülse 52 gesehen mittig deren Wandteil 58 durchgreift und die fluidführende Verbindung zwischen diesem Zweig 18a und dem Inneren des Ventilraums 54 herstellt. Der in Blickrichtung auf die Fig.4 gesehen untere Nebenzweig der Abführleitung 18b ist hingegen von dem Wandteil 58 des Schaltventils 52 vollständig freigehalten und die untere Begrenzung des Wandteils 58 schließt oberhalb der unteren Abführleitung 18b ab. Zwischen den beiden Zweigen a,b der Abführleitung 18 greift in Blickrichtung auf die Fig.4 gesehen von der rechten Seite her die Anschlußstelle 44, die über die Nebenzweigleitung 20 zur Kühleinheit 22 führt, in den Ventilraum 54 ein, wobei in der Reglerstellung "tiefe Temperatur" die dahingehende Anschlußstelle durch das Wandteil 58 des Schaltventils 52 verschlossen ist, bis auf die Drossel 38 der Permanentversorgung 36 die eine permanente fluidführende Verbindung zwischen der Anschlußstelle 44 und der Zuführleitung 16 herstellt. Die angesprochene Drossel 38 ist durch einen fluidführenden Durchlaß gebildet zwischen einem Ringraum als Teil des Ventilgehäuses, in das die Anschlußstelle 44 mündet auf der einen Seite und der Außenseite des ringförmigen Wandteils 58 auf der anderen Seite. Die Anschlußstelle 46, an die der Teil der Nebenzweigleitung 20 angeschlossen ist, die von der Kühleinheit 22 stammt, mündet unmittelbar in den fluidführenden Filterraum der Filtereinheit 10. Des weiteren ist die Längsausrichtung des Ventilraumes 54 querverlaufend angeordnet zu der Längsachse des Gehäuseteils 42 mit der Filtereinheit 10. Die mögliche Durchströmungsrichtung der Kühleinheit 22 über die Nebenzweigleitung 20 ist in den Fig.1, 2 und 4 mit Pfeilen wiedergegeben.

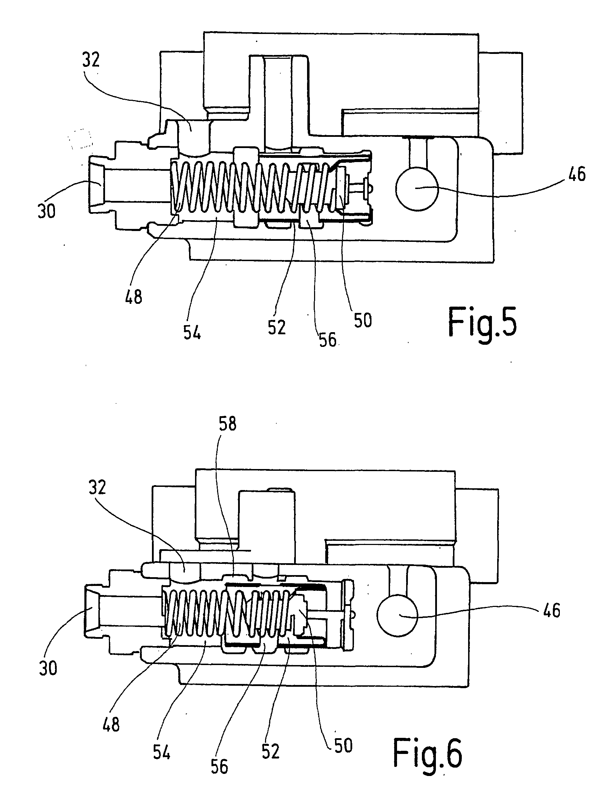

Im folgenden werden nunmehr die Reglerstellungen anhand der Fig.5 und 6 näher erläutert. Die Fig. 5 und 6 sind dabei in einer Blickrichtung gezeigt 90° verlaufend zu der Ansicht nach der Fig.4. In der Reglerstellung "tiefe Temperatur" ist das Dehnstoffelement 50 in seiner eingefahrenen Position und die Druckfeder 48 hält das hülsenförmige Schaltventil 52 in seiner in Blickrichtung auf die Fig.5 gesehenen rechten Endstellung, bei der die Oberseite des Schaltventils 52 an die rechte Begrenzungswand des Ventilraums 54 anstößt. Die Darstellung nach der Fig.5 entspricht mithin von der Schaltposition des Reglers her der Darstellung nach der Fig.4. Bei der dahingehenden Schaltstellung wird das über die Zulaufleitungen 16, 30 und 32 in den Ventilraum 54 zugeführte kalte Hydraulikmedium über den Ventilraum 54 bzw. den Durchlaß 56 direkt an die Abführleitung 18 mit ihren Zweigen 18a, b weitergegeben, so daß das kalte Hydraulikmedium unter Umgehung der Kühleinheit 22 direkt dem Filterraum mit der Filtereinheit 10 zugeführt werden kann. Jedoch wird die Kühleinheit 22 über die Drossel 38 permanent mit dem Hydraulikmedium tiefer bzw. niedriger Temperatur versorgt. Demgemäß kann kein schädlicher Staudruck in den Rücklaufleitungen 30 und 32 entstehen.

Bei Reglerstellung "hohe Temperatur", wie in der Fig.6 dargestellt, ist das Dehnstoffelement 50 ausgefahren und das hülsenförmige Schaltventil 52 nimmt entgegen der Kraft der Druckfeder 48 in Blickrichtung auf die Fig.6 gesehen seine äußerst linke Schaltstellung ein, bei der die freie Unterkante des Schaltventils 52 am linken Begrenzungsrand des Ventilraumes 54 als Anschlagteil anstößt. Die mittlere Durchlaßstelle 56 im Wandteil 58 befindet sich dann in gleicher Höhe wie der die Drossel 38 bildende Ringkanal der Anschlußstelle 44 und das zu kühlende Hydraulikmedium gelangt ausschließlich über die Anschlußstelle 44 sowie die Nebenzweigleitung 20 zur Kühleinheit 22. Nach Durchlaufen der Kühleinheit 22 gelangt dann das gekühlte Hydraulikmedium über die Anschlußstelle 46 in den Filterraum mit der Filtereinheit 10. Die sonstige Abführleitung 18 mit ihren Zweigen a, b ist dann über das Wandteil 58 des Schaltventils 52 im wesentlichen fluiddicht verschlossen. Mithin gelangt in der Reglerstellung "hohe Temperatur" also kein heißes Hydraulikmedium unmittelbar über die Abführleitung 18 zu der Filtereinheit 10. Im Hinblick auf die im Querschnitt groß dimensionierte Durchlaßstelle 56 wird in der Reglerstellung "hohe Temperatur" im wesentlichen dann auch nicht mehr die Drossel 38 von heißem Hydraulikmedium durchströmt, sondern die Drosselfunktion ist dem Grunde nach aufgehoben durch Freigabe ihres gedrosselten Querschnittes und der Ablauf erfolgt vorrangig, über den Durchlaß 56 im Wandteil 58 des Schaltventils 52.

Dadurch, daß in Strömungsrichtung des Hydraulikmediums in der Zuführleitung vor der Umschalteinrichtung ein Überströmkanal 18b parallel zum Hauptkanal 18a besteht und dieser Kanal den Strömungsquerschnitt bei tiefen oder niedrigen Temperaturen vergrößert, wird ein schädlicher Staudruck unabhängig von der Betätigungssituation der Umschalteinrichtung vermieden. Dieser Überströmkanal läßt sich konstruktiv in einfacher Weise in dem Filterkopf integrieren, insbesondere durch die Zusammenfassung der Baukomponenten Filter und Umschalteinrichtung. So wird dahingehend wenig Bauraum benötigt und die erfindungsgemäße Filtervorrichtung läßt sich demgemäß auch gießtechnisch einfach und kostengünstig herstellen und betreiben.

Bei der erfindungsgemäßen Ausführungsform einer Filtervorrichtung nach der Fig.2 ist daher vorgesehen, in der Abführleitung 18 zwei Kanäle 18a und 18b nach der Fig.4 anzubringen, die zur Filtereinheit 10 führen, welche für den Betriebszustand "tiefe oder niedere Temperaturen" den hydraulischen Widerstand reduziert.

## Patentansprüche

1. Filtervorrichtung mit mindestens einer Filtereinheit (10), die an einen Hydraulikkreis (14) anschließbar ist, mit mindestens einer Zuführ-(16) und einer Abführleitung (18) und mit mindestens einer in einer Nebenzweigleitung (20) angeschlossenen Kühleinheit (22), die parallel zu der Zuführleitung (16) in den Hydraulikkreis (14) geschaltet ist und mittels einer Umschalteinrichtung (24) bei einem vorgebbaren Temperaturschwellenwert des zu kühlenden Hydraulikmediums mit diesem versorgt ist, wobei in Strömungsrichtung des Hydraulikmediums in der Zuführleitung (16) vor der Umschalteinrichtung (24) eine Permanentversorgung (36) für die Kühleinheit (22) besteht und wobei diese Permanentversorgung (36) parallel zu der Umschalteinrichtung (24) geschaltet in die Nebenzweigleitung (20) mündet, **dadurch gekennzeichnet, dass** die Permanentversorgung (36) dabei im wesentlichen in der Art einer weiteren Zuflußleitung oder eines Zuflußkanals ausgebildet ist.

2. Filtervorrichtung nach Anspruch 1, **dadurch gekennzeichnet, daß** die Umschalteinrichtung (24) einen Öltemperaturregler aufweist, der derart eine Schaltcharakteristik hat, daß er bei niederen Temperaturen des Hydraulikmediums diesem den Weg zur Filtereinheit (10) freigibt und bei Erreichen des Temperaturschwellenwertes das erhitzte Hydrautikmedium der Kühleinheit (22) zuführt, die über die Nebenzweigleitung (20) das gekühlte Fluid an die Filtereinheit (10) weitergibt.

3. Filtervorrichtung nach Anspruch 1 oder 2, **dadurch gekennzeichnet, daß** die Permanentversorgung (36) mit einer Drossel derart versehen ist, daß insbesondere in der Betriebssituation "tiefe Temperatur" ein Entlüften der Kühleinheit (22) ohne manuelle Notbetätigung möglich ist.

4. Filtervorrichtung nach einem der Ansprüche 1 bis 3, **dadurch gekennzeichnet, daß** in die Zuführleitung (16) in Strömungsrichtung des Hydraulikmediums vor der Umschalteinrichtung (24) die Rücklaufleitungen (30,32) eines Hydromotors und eines Hydrogetriebes münden, die insbesondere zu einem hydrostatischen Getriebe zusammengefaßt sind und daß in Strömungsrichtung des Hydraulikmediums hinter der Umschalteinrichtung (24) die Rücklaufleitung (34) der Arbeitshydraulik in die Zuführleitung mündet.

5. Filtervorrichtung nach Anspruch 4, **dadurch gekennzeichnet, daß** in Strömungsrichtung des Hydraulikmediums in den Hydraulikkreis (14) hinter der Filtereinheit (10) ein Sauganschluß (B) geschaltet ist, der über ein Vorspannventil (V1), vorzugsweise in Form eines Rückschlagventiles eine hydraulische Vorspannung erfährt.

6. Filtervorrichtung nach einem der Ansprüche 1 bis 5, **dadurch gekennzeichnet, daß** zumindest die Umschalteinrichtung (24) sowie die Permanentversorgung (36) Bestandteile eines Kopfteils (40) sind, das sich mit einem Gehäuseteil (42) verbinden läßt, das die Filtereinheit (10) aufnimmt.

7. Filtervorrichtung nach Anspruch 6, **dadurch gekennzeichnet, daß** der Öltemperaturregler ein mit einem Kraftspeicher (48) beaufschlagtes Dehnstoffelement (50) aufweist, das ein hülsenförmiges Schaltventil (52) ansteuert, das entgegen der Wirkung des Kraftspeichers längsverschiebbar in einem Ventilraum (54) geführt ist.

8. Filtervorrichtung nach Anspruch 7, **dadurch gekennzeichnet, daß** in den Ventilraum (54) die Rücklaufleitungen (30,32) von Hydromotor und Hydropumpe münden sowie die zur Filtereinheit (10) führende Zuführleitung (16) einschließlich des Teils der Nebenzweigleitung (20), die zur Kühleinheit (22) führt, und daß das hülsenförmige Schaltventil (52) einen fluidführenden Durchlaß (56) in seinem Wandteil (58) aufweist.

9. Filtervorrichtung nach Anspruch 8, **dadurch gekennzeichnet, daß** der Außenumfang des Wandteils (58) mit den zuordenbaren Wandteilen des Deckelteils (40), in denen das Schaltventil (52) geführt ist, in jeder Schaltstellung desselben die Drossel (38) begrenzt.

10. Filtervorrichtung nach Anspruch 1, **dadurch gekennzeichnet, daß** die Abführleitung (18) aus zwei Kanälen (18a und b) besteht, welche einen schädlichen Staudruck vermeiden.

## Claims

1. A filter device with at least one filter unit (10) connectable to a hydraulic circuit (14) with at least one feed line (16) and one out-line (18) and connected to at least one cooling unit (22), fitted in a side branch line (20), connected parallel to the feed line (16) in the hydraulic circuit (14) and supplied with the hydraulic medium which is to be cooled by means of a switch-over device (24) at a specified threshold temperature figure of the said hydraulic medium, there being a permanent supply (36) for the cooling unit (22) in the direction of flow of the hydraulic medium in the feed line (16) upstream of the switch-over device (24) and this permanent supply (36), switched parallel to the switch-over device (24), terminating in the side branch line (20), **characterised in that** the permanent supply (36) is designed here essentially in the form of a further feed line or an in-duct.

2. A filter device according to Claim 1, **characterised in that** the switch-over device (24) has an oil temperature regulator with a switching characteristic which causes it to open the route to the filter unit (10) for the hydraulic medium at its low temperatures and, as it reaches the threshold temperature figure, feeds the heated hydraulic medium to the cooling unit (22) which passes the cooled fluid via the side branch line (20) to the filter unit (10).

3. A filter device according to Claim 1 or 2, **characterised in that** the permanent supply (36) has a throttle fitted in such a way that the cooling unit (22) can be vented without manual emergency operation, especially in a "low temperature" operating situation.

4. A filter device according to one of the Claims 1 to 3, **characterised in that** the return lines (30, 32) of a hydraulic motor and a hydraulic gear unit, which are combined especially into a hydrostatic gear unit, terminate in the feed line (16) in the direction of flow of the hydraulic medium upstream of the switch-over device (24), and that the return line (34) of the working hydraulics terminates in the feed line past the switch-over device (24) in the direction of flow of the hydraulic medium.

5. A filter device according to Claim 4, **characterised in that** a suction connection (B) is connected in the hydraulic circuit (14), past the filter unit (10) in the direction of flow of the hydraulic medium, the said suction connection being hydraulically preloaded via a pre-load valve (V1), preferably in the form of a non-return valve.

6. A filter device according to one of the claims 1 to 5, **characterised in that** at least the switch-over device (24) and the permanent feed (36) are components of a head (40) which can be connected to a housing (42) which accommodates the filter unit (10).

7. A filter device according to Claim 6, **characterised in that** the oil temperature regulator has an expansion element (50) actuated by an energy accumulator (48), which controls a sleeve-like control valve (52) which is longitudinally displaceable against the action of the energy accumulator moving in a valve space (54).

8. A filter device according to Claim 7, **characterised in that** the return lines (30, 32) from the hydraulic motor and the hydraulic pump terminate in the valve space (54) and the feed line (16) leading to the filter unit (10), and so does the side branch line (20) leading to the cooling unit (22), and that the sleeve-like control valve (52) has fluid carrying passage (56) in its wall part (58).

9. A filter device according to Claim 8, **characterised in that** the periphery of the wall part (58) together with the associated wall parts of the cover part (40) in which the control valve (52) is guided, delimits the throttle (38) in each of its control positions.

10. A filter device according to Claim 1, **characterised in that** the out-line (18) consists of two ducts (18a and b) which prevent a harmful dynamic pressure occurring.

## Revendications

1. Dispositif de filtration avec au moins une unité de filtration (10), qui peut être raccordée à un circuit hydraulique (14), avec au moins une conduite d'alimentation (16) et une conduite d'évacuation (18) et avec au moins une unité de réfrigération (22) raccordée dans une conduite de dérivation (20), unité de réfrigération qui est montée parallèlement à la conduite d'évacuation (16) dans le circuit hydraulique (14) et qui est alimentée en liquide hydraulique au moyen d'un dispositif de commutation (24) pour une valeur seuil de température du liquide hydraulique qu'on peut prédéfinir, moyennant quoi, en direction de flux du liquide hydraulique, une alimentation permanente (36) pour l'unité de réfrigération (22) se trouve dans la conduite d'évacuation (16) avant le dispositif de commutation (24) et moyennant quoi cette alimentation permanente (36), montée parallèlement au dispositif de commutation (24) débouche dans la conduite de dérivation (20), **caractérisé en ce que** l'alimentation permanente (36) est conçue essentiellement à la manière d'une autre conduite d'alimentation ou d'un canal d'alimentation.

2. Dispositif de filtration selon la revendication 1, **caractérisé en ce que** le dispositif de commutation (24) présente un régulateur de température d'huile qui a pour caractéristique de libérer pour le liquide hydraulique en cas de températures inférieures de celui-ci la voie vers l'unité de filtration (10) et, lorsque la valeur seuil de température est atteinte, de conduire le liquide hydraulique chauffé autour de l'unité de réfrigération (22) qui transmet le fluide réfrigéré à l'unité de filtration (10) par la conduite de dérivation (20).

3. Dispositif de filtration selon la revendication 1 ou 2, **caractérisé en ce que** l'alimentation permanente (36) est équipée d'un étranglement de manière à ce que, surtout en situation de fonctionnement à « basse température », une désaération de l'unité de réfrigération (22) soit possible sans actionnement manuel d'urgence.

4. Dispositif de filtration selon l'une des revendications 1 à 3, **caractérisé en ce que** débouchent dans la conduite d'alimentation (16) en direction de flux du liquide hydraulique, avant le dispositif de commutation (24), les conduites de retour (30, 32) d'un moteur hydraulique et d'un entraînement hydraulique, qui constituent ensemble en particulier un entraînement hydrostatique et **en ce que**, en direction de flux du liquide hydraulique, débouche derrière le dispositif de commutation (24) la conduite de retour (34) du système hydraulique dans la conduite d'alimentation.

5. Dispositif de filtration selon la revendication 4, **caractérisé en ce que**, en direction de flux du liquide hydraulique, est monté dans le circuit hydraulique (14) derrière l'unité de filtration (10) un raccord d'aspiration (8), qui transmet une précontrainte hydraulique par une vanne de précontrainte (V1), de préférence sous la forme d'une vanne de non-retour.

6. Dispositif de filtration selon l'une des revendications 1 à 5, **caractérisé en ce que**, au moins le dispositif de commutation (24) ainsi que l'alimentation permanente (36) font parties intégrantes d'une tête (40) qui peut être raccordée à un corps (42), qui loge l'unité de filtration (10).

7. Dispositif de filtration selon la revendication 6, **caractérisé en ce que** le régulateur de température d'huile présente un élément en matériau extensible (50) alimenté avec un accumulateur d'énergie (48) qui pilote une vanne de commutation (52) en forme de manchon, conduite à l'encontre de l'accumulateur d'énergie dans une zone de la vanne (54) de manière à pouvoir être déplacée en direction longitudinale.

8. Dispositif de filtration selon la revendication 7, **caractérisé en ce que** débouchent dans la zone de la vanne (54) les conduites de retour (30, 32) du moteur hydraulique et de la pompe hydraulique ainsi que la conduite d'alimentation (16) menant à l'unité de filtration y compris la partie de la conduite de dérivation (20), qui conduit à l'unité de réfrigération (22), et **en ce que** la vanne de commutation (52) en forme de manchon présente dans une partie de la paroi (58) un passage (56) véhiculant le fluide.

9. Dispositif de filtration selon la revendication 8, **caractérisé en ce que** le pourtour extérieur de la partie de la paroi (58) avec les parties affectables des parois de la partie du couvercle (40), dans lesquelles la vanne de commutation (52) est guidée, limite dans chaque position de commutation de la vanne de commutation l'étranglement (38).

10. Dispositif de filtration selon la revendication 1, **caractérisé en ce que** la conduite d'évacuation (18) se compose de deux canaux (18a et b), qui empêchent une pression de retenue néfaste.
